# EUROPÄISCHE PATENTSCHRIFT

(11) **EP 3 795 856 B1**
(45) Veröffentlichungstag und Bekanntmachung des Hinweises auf die Patenterteilung: **19.03.2025**
(21) Anmeldenummer: 20192774.6
(22) Anmeldetag: 25.08.2020
(51) Int. Cl.: F16F 1/02, F16F 9/04, F16F 9/38

(54) **BALG ZUM SCHUTZ EINER FEDERVORRICHTUNG**
BELLOWS FOR PROTECTING A SPRING DEVICE
SOUFFLET DE PROTECTION D'UN DISPOSITIF À RESSORT

(30) Priorität: 20.09.2019 DE 102019214373
(43) Veröffentlichungstag der Anmeldung: 24.03.2021
(73) Patentinhaber: ContiTech Deutschland GmbH, 30175 Hannover (DE)
(72) Erfinder: Kielbasiewicz, Hans-Harald, 30419 Hannover (DE); Sanz, Andre, 30419 Hannover (DE); Zander, Christoph, 30419 Hannover (DE)
(74) Vertreter: Continental Corporation

(56) Entgegenhaltungen:
- EP-A1- 3 498 567
- EP-B1- 3 498 567
- GB-A- 2 478 906
- JP-A- 2007 278 398

## Beschreibung

Die Erfindung betrifft ein Balg zum Schutz einer Federvorrichtung.

Ein Balg zum Schutz einer Federvorrichtung ist aus dem Stand der Technik grundsätzlich bekannt. Der Balg kann auch als Manschette bezeichnet sein. Der Balg kann derart um die Federvorrichtung, insbesondere um ein Federelement der Federvorrichtung, angeordnet sein, sodass der Balg das Federelement bzw. die Federvorrichtung mantelseitig umhüllt, so dass der Balg zur Umgebung ganz oder teilweise abschirmt wird. Damit kann eine Schutzwirkung für die Federvorrichtung, und insbesondere für das Federelement der Federvorrichtung, erzielt werden.

Auch Federvorrichtungen sind grundsätzlich aus dem Stand der Technik bekannt. Die Federvorrichtung kann das zuvor genannte Federelement aufweisen. Hierbei kann es sich beispielsweise um ein elastisch verformbares Federelement handeln. Dieses Federelement kann zumindest teilweise aus Gummi oder einem anderen elastisch verformbaren Material hergestellt sein. In der Praxis wurde festgestellt, dass derartig elastisch verformbare Federelemente durch mechanisches Einwirken und/oder durch Hitze bzw. Feuer besonders leicht beschädigt werden können. Es wurde deshalb der Bedarf erkannt, dass elastisch verformbare Federelemente vor äußeren Einflüssen zu schützen. Dies kann mit einem Balg zum Schutz der Federvorrichtung, und insbesondere zum Schutz des Federelements der Federvorrichtung erreicht werden. Denn der Balg kann derart zu dem Federelement angeordnet sein, sodass sich der Balg mantelseitig um das Federelement erstreckt und dadurch das Federelement mantelseitig umhüllt. Der Balg dient deshalb zum Schutz des Federelements und somit zumindest auch zum Schutz vor einem Teil der Federvorrichtung.

In der Praxis wurde festgestellt, dass ein besonders schwerer Steinschlag oder eine andere mechanische Beeinflussung durch ein anderes, beispielsweise mechanisches Teil über den Balg auf das elastisch verformbare Federelement einwirken kann. Bei einem derartigen Ereignis kann es deshalb nicht sicher gewährleistet werden, dass der Schutzbalg ebenfalls einer Zerstörung unterlag oder entsprechende Veränderungen am Balg sofort erkennbar sind. In einem ungünstigen Fall kann der Balg keinen direkten Aufschluss darüber geben, ob das elastisch verformbare Federelement der Federvorrichtung beschädigt ist oder in der Vergangenheit beschädigt wurde. Darüber hinaus unterliegt das elastisch verformbare Federelement der Federvorrichtung einer natürlichen Abnutzung, die durch die Federbewegung des elastisch verformbaren Federelements der Federvorrichtung auftreten kann. Eine Möglichkeit zur ersten Überprüfung der Abnutzung des elastisch verformbaren Federelements der Federvorrichtung könnte zwar grundsätzlich durch eine optische Überprüfung des Federelements erfolgen. In der Praxis wird dazu der Balg beim Abtrennen von der Federvorrichtung zerstört, um einen ungehinderten Zugang zu dem elastisch verformbaren Federelement zu erlangen und eine schnelle und einfache Wartung oder Überprüfung des elastisch verformbaren Federelements durchführen zu können. Der Aufwand für eine derartige Wartung ist jedoch sehr hoch. Denn im Anschluss muss ein neuer Balg in Axialrichtung über die Federvorrichtung und somit auch über das Federelement geschoben werden, um die Schutzwirkung für das elastisch verformbare Federelement der Federvorrichtung wieder zu erreichen. Dies bedarf eines zumindest teilweisen Lösens der Federvorrichtung von anderen Bauteilen, insbesondere wenn die Federvorrichtung in einem Fahrwerk eines Fahrzeugs verbaut ist. Vielfach muss dazu das Fahrzeug angehoben werden. Dies verursacht einen hohen Zeitaufwand mit entsprechenden Kosten.

Die JP 2007 278398 A beschreibt ein Schwingungsdämpfungsgerät für ein Schienenfahrzeug, welches durch Einkleben eines ringförmigen elastischen Körpers zwischen einer Welle und einem Außenring gebildet wird. Der elastische Körper mit laminierter Gummistruktur wird durch abwechselndes Anbringen von Zwischenringen und Gummischichten gebildet. Eine Schutzabdeckung zum Abdecken des elastischen Körpers, die nicht nach außen hin sichtbar sein soll, ist in einem abdichtenden Zustand passend auf jeder der Wellen und des Außenrings angebracht.

Der vorliegenden Erfindung liegt deshalb die Aufgabe zugrunde, ein Balg zum Schutz einer Federvorrichtung bereitzustellen, wobei der Balg eine besonders einfache Möglichkeit bieten soll, um eine optische Überprüfung der Federvorrichtung, insbesondere des zugehörigen, elastisch verformbaren Federelements, zu gewährleisten.

Gelöst wird die Aufgabe gemäß einem ersten Aspekt der Erfinder durch einen Balg mit dem Merkmal eines Anspruchs 1. Vorgesehen ist also ein Balg zum Schutz einer Federvorrichtung. Der Balg ist derart ringförmig ausgebildet, sodass sich der Balg von einem ersten, stirnseitigen Balgende zu einem zweiten, stirnseitigen Balgende erstreckt. Außerdem ist der Balg verformbar ausgebildet, um von einer Öffnungsstellung in eine Schließstellung versetzt zu werden. Der Balg ist in der Öffnungsstellung entlang einer Trennlinie, die sich von dem ersten Balgende zu dem zweiten Balgende erstreckt, unterbrochen. Der Balg ist in der Schließstellung an der Trennlinie geschlossen.

In der Öffnungsstellung ist der Balg entlang der Trennlinie unterbrochen, die sich von dem ersten Balgende zum zweiten Balgende erstreckt. Das erste Balgende kann auch als das erste, axialseitige Ende des Balgs bezeichnet werden oder als dieses ausgestaltet sein. Das zweite Balgende kann auch als zweites, axialseitiges Ende des Balgs bezeichnet werden oder als solches ausgestaltet sein. Das erste und zweite Balgende bilden vorzugsweise in Axialrichtung gegenüberliegende Enden des Balgs. Die Fläche an beiden stirnseitigen Balgenden kann kreisringförmig sein, wobei diese Fläche in der Öffnungsstellung des Balgs unterbrochen und in der Schließstellung des Balgs geschlossen sein kann.

Ist der Balg in der Öffnungsstellung, so kann der Balg aufgrund der Unterbrechung an der Trennlinie über die Federvorrichtung oder zumindest über ein Federelement der Federvorrichtung geschoben werden, sodass der Balg mantelseitig um das Federelement oder die gesamte Federvorrichtung greift. Wird der Balg in die Schließstellung versetzt, sodass die Trennlinie geschlossen ist, umhüllt der Balg insbesondere das Federelement der Federvorrichtung oder die gesamte Federvorrichtung mantelseitig. Zumindest wird der Teil des Federelements mantelseitig umhüllt, das Gummimaterial und/oder Kunststoffmaterial aufweist. Somit ist der Begriff "umhüllen" in diesem Zusammenhang als ein zumindest teilweises Umhüllen und vorzugsweise als ein vollständiges Umhüllen zu verstehen. Dies gewährleistet den gewünschten Schutz der Federvorrichtung oder zumindest des Federelements der Federvorrichtung. Denn das Federelement der Federvorrichtung ist oftmals als ein elastisch verformbares Federelement ausgebildet. Mit dem Balg kann dieses Federelement beispielsweise vor Schmutz, Licht, Schnee, Wasser, Feuer und/oder Wärme geschützt sein.

Die Federvorrichtung kann derart ausgestaltet sein, dass sich das zugehörige, elastische verformbare Federelement in einer Axialrichtung der Federvorrichtung zwischen zwei Befestigungselementen der Federvorrichtung erstreckt. Die beiden Balgenden des Balgs können nach dem Versetzen des Balgs in die Schließstellung derart angeordnet sein, sodass die gegenüberliegenden Balgenden des Balgs an den gegenüberliegenden Befestigungselementen der Federvorrichtung befestigt sind. Dies hat den Vorteil, dass das zwischen den beiden Befestigungselementen angeordnete, elastisch verformbare Federelement mantelseitig durch den Balg geschützt ist.

Der Balg ist vorzugsweise vollständig oder zumindest teilweise aus einem Gummimaterial gebildet. Das Gummimaterial kann dazu ausgebildet und/oder geformt sein, um in einer Vertikalrichtung zwischen dem ersten Balgende und dem zweiten Balgende elastisch verformt zu werden. Eine Ringwand des Balgs kann dazu beispielsweise mehrere Falten aufweisen. Dies ist jedoch nur eine mögliche Ausgestaltung. Die Ringwand kann auch wellenförmig ausgebildet sein, sodass sich Wellenberge und Wellentäler bilden, die sich jeweils abwechselnd in einer Umfangsrichtung des Balgs erstrecken. Durch die wellenförmige Ausgestaltung oder durch die Falten des Balgs kann eine besonders gute Verformbarkeit des Balgs in Vertikalrichtung gewährleistet werden.

Indem der Balg in der Öffnungsstellung seitlich über das Federelement der Federvorrichtung geschoben werden kann, kann der Balg auch nachträglich an einer bereits in einem Fahrzeug verbauten Federvorrichtung befestigt werden. Denn der Balg in Öffnungsstellung kann seitlich über das Federelement der Federvorrichtung geschoben werden, um im Anschluss in die Schließstellung versetzt zu werden. Zu Wartungszwecken kann der Balg von der Schließstellung wieder in die Öffnungsstellung versetzt werden, um den Balg zumindest vorrübergehend von der Federvorrichtung zu trennen. Dies erlaubt eine Überprüfung und/oder Wartung des Federelements der Federvorrichtung. Sollte der Balg aus der Schließstellung nicht zerstörungsfrei in die Öffnungsstellung versetzt werden können, so ist es möglich, im Anschluss an die Wartung und/oder Überprüfung des Federelements der Federvorrichtung einen neuen Balg zu verwenden, der in der Öffnungsstellung ist. In dieser Öffnungsstellung wird der Balg über das Federelement der Federvorrichtung geschoben, um anschließend in die Schließstellung versetzt zu werden. Der Balg ist vorzugsweise dazu ausgebildet, um selbstständig in der Schließstellung zu verbleiben. Die Schließstellung des Balgs kann also eine stabile Stellung des Balgs sein. Außerdem ist es bevorzugt vorgesehen, dass der Balg derart verformbar ausgebildet ist, um zerstörungsfrei von der Öffnungsstellung in die Schließstellung versetzt zu werden. Es kann auch vorgesehen sein, dass der Balg derart verformbar ist, um zerstörungsfrei von der Schließstellung in die Öffnungsstellung versetzt zu werden. Dies ist jedoch nicht zwingend notwendig. So kann der Balg auch derart ausgebildet sein, dass der Balg nicht ohne Zerstörung aus der Schließstellung in eine andere als die Schließstellung, insbesondere die Öffnungsstellung, versetzt werden kann. Dies bietet den Vorteil, dass sofort nachvollziehbar ist, wenn der Balg aus der Schließstellung, insbesondere durch unsachgemäßes, mechanisches Einwirken, in die Öffnungsstellung versetzt wurde. Mit anderen Worten kann eine Sabotage des in der Schließstellung befindlichen Balgs dadurch besonders einfach erkannt werden.

Eine vorteilhafte Ausgestaltung des Balgs zeichnet sich dadurch aus, dass sich die Trennlinie des Balgs in einer Vertikalrichtung des Balgs erstreckt. Die Vertikalrichtung des Balgs ist vorzugsweise übereinstimmend oder parallel zu einer Längsachse des Balgs. Die Vertikalrichtung kann sich also beispielsweise entlang oder parallel zu einer Achse erstrecken, die fluchtend und mittig durch den Balg von einer ersten Stirnseite des Balgs zu der gegenüberliegenden, zweiten Stirnseite des Balgs verläuft. Die sich in Vertikalrichtung erstreckende Trennlinie bietet den Vorteil, dass der Balg in der Öffnungsstellung besonders einfach über ein Federelement einer Federvorrichtung geschoben werden kann. Denn entlang der Trennlinie kann die Unterbrechung aufgeweitet werden, sodass der Innenraum des Balgs von außen zugänglich ist. Die sich in Vertikalrichtung erstreckende Trennlinie bietet dabei den Vorteil, dass der Balg nicht weiter an der Trennlinie aufgebogen werden muss, als notwendig. Dies erleichtert die Montage des Balgs an der Federvorrichtung.

Eine weitere vorteilhafte Ausgestaltung des Balgs zeichnet sich dadurch aus, dass sich die Trennlinie des Balgs spiralförmig umlaufend von dem ersten Balgende zum zweiten Balgende erstreckt. An der Trennlinie können sich das erste Verschlussende und das zweite Verschlussende überlappen, wenn der Balg in der Schließstellung ist. Es ist jedoch auch möglich, dass das erste und zweite Verschlussende auf Stoß verbunden sind, wenn der Balg in der Schließstellung ist.

Eine weitere vorteilhafte Ausgestaltung des Balgs zeichnet sich dadurch aus, dass eine erste, radial nach innen ragende Lippe an dem ersten Balgende des Balgs ausgebildet ist. Mit dieser Lippe kann der Balg in eine entsprechende, ringförmige Nut eines ersten Befestigungselements der Federvorrichtung greifen, nachdem der Balg in der Öffnungsstellung über das Federelement und/oder die Federvorrichtung geschoben wurde, sodass der Balg zumindest das Federelement mantelseitig umgreift. Wird der Balg dann in die Schließstellung versetzt, kann die erste Lippe umlaufend in die entsprechende Nut des ersten Befestigungselements eingreifen und dadurch eine formschlüssige Verbindung zu der Federvorrichtung herstellen. Die erste Lippe kann außerdem derart ausgebildet sein, um eine staubdichte Verbindung und/oder einen staubdichten Verschluss zwischen dem ersten Balgende und dem ersten Befestigungselement der Federvorrichtung herzustellen.

Eine weitere vorteilhafte Ausgestaltung des Balgs zeichnet sich dadurch aus, dass eine zweite, radial nach innen ragender Lippe an dem zweiten Balgende des Balgs ausgebildet ist. Mit dieser Lippe kann der Balg in eine entsprechende, ringförmige Nut eines zweiten Befestigungselements der Federvorrichtung angreifen, nachdem der Balg in der Öffnungsstellung über das Federelement und/oder die Federvorrichtung geschoben wurde, sodass der Balg zumindest das Federelement mantelseitig umgreift. Wird der Balg dann in die Schließstellung versetzt, kann die zweite Lippe umlaufend in die entsprechende Nut des zweiten Befestigungselements eingreifen und dadurch eine formschlüssige Verbindung zu der Federvorrichtung herstellen. Die zweite Lippe kann außerdem derart ausgebildet sein, um eine staubdichte Verbindung und/oder einem staubdichten Verschluss zwischen dem zweiten Balgende und dem zweiten Befestigungselement der Federvorrichtung herzustellen.

Indem die erste Lippe einen ersten schmutzdichten Verschluss zu dem ersten Befestigungselement und die zweite Lippe einen schmutzdichten Verschluss zum zweiten Befestigungselement der Federvorrichtung herstellen können, kann der dazwischen gebildete Innenraum zwischen dem Balg und dem Federelement frei von Schmutz gehalten werden. Die Verschlüsse können auch derart ausgebildet sein, um zu verhindern, dass Licht, Schnee oder Wasser in der zuvor genannten Innenraum eintreten kann. Mit anderen Worten können die erste und zweite Lippe derart ausgebildet sein, sodass der in der Schließfindung geschlossene Balg derart an der Federvorrichtung befestigt ist, um einen Innenraum zwischen dem Balg und dem Federelement zu bilden, der vor Schmutz, Licht, Schnee oder Wasser geschützt ist. Gleichzeitig und/oder alternativ können die beiden Lippen des Balgs dazu dienen, um ein Verrutschen des Balgs an der Federvorrichtung zu verhindern.

Erfindungsgemäß weist der Balg ein erstes Verschlussende und ein zweites Verschlussende auf, die in der Öffnungsstellung des Balgs entlang der Trennlinie einander gegenüberliegend und/oder in der Öffnungsstellung des Balgs entlang der Trennlinie getrennt voneinander angeordnet sind. In der Öffnungsstellung des Balgs weisen das erste und zweite Verschlussende des Balgs in entgegengesetzte Richtung auf die Trennlinie. Jedes der beiden Verschlussenden erstreckt sich entlang der Trennlinie von dem ersten, stirnseitigen Balgende durch die Ringwand des Balgs hin zu dem zweiten, stirnseitigen Balgende. Somit können die beiden Verschlussenden in der Öffnungsstellung des Balgs die in Umfangsrichtung gebildeten Enden der Ringwand des Balgs bilden, die entlang der Trennlinie einander gegenüberliegend und/oder getrennt voneinander angeordnet sind. Um den Balg in der Öffnungsstellung seitlich über das Federelement zu schieben, können die beiden Verschlussenden gegriffen und der Abstand in Umfangsrichtung zwischen den beiden Verschlussenden vergrößert werden, und zwar durch eine elastische Verformung des Gummimaterials des Balgs, sodass der Balg mit den beiden Verschlussenden voran derart über die Federvorrichtung oder das zugehörige Federelement geschoben werden kann, bis der Balg zumindest das Federelement der Federvorrichtung umgreift. Daraufhin können die beiden Verschlussenden wieder aufeinander zubewegt werden, bis die Trennlinie geschlossen ist. Die beiden Verschlussenden können ausgebildet sein, um lösbar oder nicht zerstörungsfrei miteinander verbunden zu werden.

Eine weitere vorteilhafte Ausgestaltung des Balgs zeichnet sich dadurch aus, dass der Balg derart verformbar ist, sodass ein Abstand in Umfangsrichtung des Balgs zwischen dem ersten Verschlussende und dem zweiten Verschlussende in der Öffnungsstellung des Balgs vergrößerbar ist, sodass eine Unterbrechungsöffnung entsteht, die sich von dem ersten, stirnseitigen Balgende des Balgs zu dem zweiten, stirnseitigen Balgende des Balgs erstreckt. Die Unterbrechungsöffnung kann sich also sowohl zwischen den beiden stirnseitigen Balgenden als auch zwischen den beiden Verschlussenden des Balgs erstrecken. In Umfangsrichtung kann die Unterbrechungsöffnung derart groß sein, sodass der Balg in der Öffnungsstellung zumindest über das Federelement der Federvorrichtung geschoben werden kann, bis der Balg das Federelement mantelseitig umgreift.

Eine weitere vorteilhafte Ausgestaltung des Balgs zeichnet sich dadurch aus, dass das erste und zweite Verschlussende in der Schließstellung des Balgs einander in Umfangsrichtung des Balgs überlappen. Insbesondere nachdem der Balg zumindest über das Federelement in der Öffnungsstellung geschoben wurde, sodass der Balg das Federelement mantelseitig umgreift, kann der Balg in die Schließstellung versetzt werden. Dabei können das erste und zweite Verschlussende wieder aufeinander zubewegt werden, und zwar derart, dass das erste Verschlussende das zweite Verschlussende, oder umgekehrt, überlappt. Dadurch entsteht die gewünschte Überlappung zwischen dem ersten und zweiten Verschlussende. Im entsprechenden Überlappungsbereich kann eine Verbindung zwischen dem ersten und zweiten Verschlussende geschaffen werden, um eine feste Verbindung zwischen den beiden Verschlussenden zu erreichen. Diese feste Verbindung zwischen den beiden Verschlussenden kann kraftschlüssig, formschlüssig und/oder stoffflüssig ausgestaltet sein. Somit kann der Balg in der Schließstellung mantelseitig geschlossen sein. Dadurch kann ein besonders guter Schutz zumindest des Federelements der Federvorrichtung erreicht werden. Dieser Schutz kann sich insbesondere auf den Schutz vor Schmutz, Licht, Schnee und/oder Wasser beziehen.

Eine weitere vorteilhafte Ausgestaltung des Balgs zeichnet sich dadurch aus, dass das erste und zweite Verschlussende auf Stoß in der Schließstellung des Balgs in Umfangsrichtung des Balgs aneinander anliegen. Wird der Balg also wie zuvor erläutert in die Schließstellung versetzt, kann es vorgesehen sein, dass das erste und zweite Verschlussende nicht derart aufeinander zubewegt werden, dass sich die beiden Verschlussenden überlappen. Es kann vielmehr wie in der genannten vorteilhaften Ausgestaltung vorgesehen sein, dass das erste Verschlussende derart auf das zweite Verschlussende zubewegt wird, sodass das erste Verschlussende auf das zweite Verschlussende stößt, insbesondere ohne dabei das zweite Verschlussende zu überlappen. Dadurch kann eine Stoßverbindung zwischen dem ersten und zweiten Verschlussende erzielt werden. Das erste und zweite Verschlussende können ausgebildet sein, um eine auf Stoß ausgestaltete Verbindung zwischen dem ersten und zweiten Verschlussende zu gewährleisten. Diese Verbindung kann beispielsweise eine stoffflüssige Verbindung sein. Es ist jedoch auch möglich, dass die auf Stoß ausgestaltete Verbindung zwischen dem ersten und zweiten Verschlusselement alternativ oder ergänzend als eine kraftschlüssige oder als eine formschlüssige Verbindung ausgebildet ist.

Erfindungsgemäß sind an dem ersten Verschlussende ein erstes Verschlussmittel und an dem zweiten Verschlussende ein zweites Verschlussmittel ausgebildet, wobei das erste und zweite Verschlussmittel ausgebildet sind, um kraftschlüssig und/oder formschlüssig miteinander verbunden zu werden. So können das erste und zweite Verschlussmittel beispielsweise derart ineinander greifen, um eine kraftschlüssige und/oder formschlüssige Verbindung herzustellen. Derartige Verschlussmittel sind grundsätzlich aus dem Stand der Technik bekannt. Wenn der Balg also von der Öffnungsstellung in die Schließstellung versetzt wird, können das erste und zweite Verschlussende dabei derart aufeinander zubewegt werden, dass das erste Verschlussmittel in das zweite Verschlussmittel, oder umgekehrt, greift, um die kraft- und/oder formschlüssige Verbindung zwischen den beiden Verschlussenden zu bewirken. Diese Verbindung kann als eine lösbare Verbindung ausgestaltet sein. Es ist jedoch auch möglich, dass die Verbindung als eine nicht zerstörungsfrei wiederaufhebbare Verbindung ausgebildet ist. Mit anderen Worten muss die Verbindung und/oder die Verbindungsmittel zumindest teilweise zerstört werden, um die Verbindung zwischen den beiden Verschlussenden aufzuheben. Hingegen bietet eine lösbare Ausgestaltung der Verbindung den Vorteil, dass der Balg für eine Wartung und/oder Prüfung von der Schließstellung zerstörungsfrei in die Öffnungsstellung versetzt werden kann, um die Prüfung und/oder Wartung auszuführen. Daraufhin kann der Balg von der Öffnungsstellung wieder in die Schließstellung zerstörungsfrei versetzt werden. Der Balg kann also mehrfach wiederverwendet werden. Ist der Balg hingegen mittels der ersten und zweiten Verschlussmittel derart ausgebildet, dass die Verbindung zwischen den beiden Verschlussmitteln in der Schließstellung nicht zerstörungsfrei aufgehoben werden kann, ist der Balg nicht wiederverwertbar. Jedoch lässt sich an dem Balg besonders einfach eine Sabotage oder Anzeichen von Veränderungen oder ersten Wartungsmaßnahmen erkennen.

Eine weitere vorteilhafte Ausgestaltung des Balgs zeichnet sich dadurch aus, dass das erste und zweite Verschlussmittel ausgebildet sind, um in der Schließstellung des Balgs eine Verschlussnaht zu bilden, die sich ununterbrochen von dem ersten, stirnseitigen Balgende des Balgs zu dem zweiten, stirnseitigen Balgende des Balgs erstreckt. Indem die Verschlussnaht in der Schließstellung des Balgs ununterbrochen geschlossen ist, kann ein besonders vollständiger und sicherer Schutz des Federelements gewährleistet werden. Die Verschlussnaht kann durch die kraftschlüssige und/oder formschlüssige Verbindung zwischen dem ersten und zweiten Verschlussmittel gebildet sein. Außerdem ist es bevorzugt vorgesehen, dass die Verschlussnaht in der Schließstellung vollständig und ununterbrochen geschlossen ist. Jedoch ist es auch bevorzugt vorgesehen, dass die Verschlussnaht beim Versetzen des Balgs von der Schließstellung in die Öffnungsstellung wieder geöffnet werden kann. Hierzu kann ein Hilfsmittel verwendet werden, um die kraft- und/oder formschlüssige Verbindung zwischen dem ersten und zweiten Verschlussmittel wieder aufzuheben. Das erste und zweite Verschlussmittel kann hierzu entsprechend ausgebildet werden. Die Verschlussnaht bietet deshalb insgesamt den Vorteil, dass der Balg in der Schließstellung einen wirksamen Schutz für das Federelement bietet. Allerdings bietet die Verschlussnaht auch die Möglichkeit, dass ein zerstörungsfreier Übergang von der Schießstellung in die Öffnungsstellung möglich ist, sodass der Balg mehrfach wiederverwendet werden kann oder dass der Balg die Möglichkeit bietet, das Federelement der Federvorrichtung zu überprüfen und/oder zu warten, ohne dass es im Anschluss eines neuen Balgs bedarf, der nach dem Versetzen in die Schließstellung den wirksamen Schutz wieder für das Federelement erlaubt.

Erfindungsgemäß sind das erste und zweite Verschlussmittel ausgebildet, in der Schießstellung eine Rasterverbindung zu bilden. So können das erste und zweite Verschlussmittel beispielsweise dazu ausgebildet sein, in der Schließstellung eine Rastverbindung zu bilden. Dazu können die ersten Verschlussmittel als Rastnasen an dem ersten Verschlussende ausgebildet sein, die dazu ausgebildet sind, um in Rastnuten als zweite Verschlussmittel an dem zweiten Verschlussende form- und/oder kraftschlüssig einzugreifen. Indem die Rastnasen in die Rastnuten eingreifen, kann die gewünschte Rastverbindung zwischen dem ersten und zweiten Verschlussmittel erreicht werden. Die Rastverbindung kann ausgebildet sein, um auch wieder zerstörungsfrei gelöst zu werden. So können die Rastnasen beispielsweise aus den Rastnuten wieder rausgezogen werden, um die Rastverbindung wieder aufzulösen. Anstatt der Rastverbindung kann auch eine Klettverschlussverbindung in der Schließstellung von dem ersten und zweiten Verschlussmittel gebildet sein. Die ersten Verschlussmittel können beispielsweise Verschlusshaken und die zweiten Verschlussmittel Verschlussösen bilden, sodass die Verschlusshaken in die Verschlussösen eingreifen können, um die Klettverschlussverbindung zu bilden. Die Klettverschlussverbindung kann vorzugsweise wieder zerstörungsfrei aufgehoben werden. Es ist jedoch in einer alternativen Ausgestaltung ebenfalls möglich, dass die ersten und zweiten Verschlussmittel in der Schließstellung des Balgs eine Reisverschlussverbindung bilden. Dazu können die ersten und zweiten Verschlussmittel nach Art von Reisverschlusshaken ausgebildet sein, die kraft- und/oder formschlüssig ineinander greifen können, wobei ein weiteres Hilfsmittel verwendet werden kann, um dieses Ineinandergreifen zu gewährleisten. In einer weiteren vorteilhaften Ausgestaltung können das erste und zweite Verschlussmittel in der Schließstellung eine Steckverbindung bilden. Das erste und zweite Verschlussmittel kann dazu ausgebildet sein, um formschlüssig ineinanderzugreifen, um eine sich nicht selbstständig lösende Verbindung zu bilden. Es kann jedoch auch vorgesehen sein, dass diese Verbindung zwar selbstsperrend aber grundsätzlich wieder auflösbar ist, um ein zerstörungsfreies Warten und/oder Überprüfen des Balgs aus der Schließstellung in die Öffnungsstellung zu gewährleisten. Andere Verbindungsarten für den Balg in der Schließstellung mittels der ersten und zweiten Verschlussmittel sind ebenfalls denkbar und/oder möglich.

Erfindungsgemäß bildet das erste Verschlussmittel eine Doppellippe und das zweite Verschlussmittel eine einzelne Lippe aus.

Eine weitere vorteilhafte Ausgestaltung des Balgs zeichnet sich dadurch aus, dass eine Ringwand des Balgs aus einem Gummimaterial gebildet ist, das Natur aus brandhemmende Eigenschaften aufweist. Dieses Gummimaterial kann brandhemmend sein, ohne zusätzliches Flammschussmittel einsetzen zu müssen.

Eine weitere vorteilhafte Ausgestaltung des Balgs zeichnet sich dadurch aus, dass eine Ringwand des Balgs aus einem Gummimaterial gebildet ist, das ein Flammschutzmittel enthält. Alternativ oder ergänzend kann es vorgesehen sein, dass der gesamte Balg aus einem Gummimaterial gebildet ist, das ein Flammenschutzmittel enthält. In beiden zuvor genannten Ausgestaltungen wird also Gummimaterial verwendet, das Flammenschutzmittel enthält. In einer vorteilhaften Ausgestaltung zeichnet sich das jeweilige Gummimaterial dadurch aus, dass es sich bei dem Gummimaterial um eine erste Kautschukmischung handelt, die wenigstens eine Kautschukkomponente enthält. Als Kautschukkomponenten sind insbesondere zu nennen: Ethylen-Propylen-Kautschuk (EPM), Ethylen-Propylen-Dien-Kautschuk (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR), Bromiertes Copolymer aus Isobutylen und Paramethylstyrol (BIMS), Butadien-Kautschuk (BR), Chloriertes Polyethylen (CM) und/oder Chlorsulfoniertes Polyethylen (CSM). Die vorgenannten Kautschuktypen können unverschnitten sein. Auch der Einsatz eines Verschnittes, insbesondere in Verbindung mit einem der vorgenannten Kautschuktypen, beispielsweise ein Verschnitt von einem Naturkautschuk (NR) und einem Polyisoprenkautschuk (IR) als sogenannter NR/IR-Verschnitt, NR/BR-Verschnitt oder ein BR/SBR-Verschnitt, ist möglich. Vorzugsweise enthält die Kautschukmischung des Gummimaterials außerdem mindestens eine weitere Mischungsingredienzie. Als Mischungsingredienzien sind zu nennen: Vernetzer, Vernetzungssystem, die ein Vernetzungsmittel und einen Beschleuniger umfassen, Füllstoff, Verarbeitungshilfsmittel, Weichmacher, Alterungsschutzmittel, und/oder Farbpigmente. Vorzugsweise enthält das Gummimaterial zusätzlich wenigstens ein Flammschutzmittel. Bevorzugt handelt es sich hierbei um ein halogenfreies Flammschutzmittel oder um eines, was einen möglichst niedrigen Halogenanteil besitzt, damit im Brandfall die Menge an toxischen Rauchgasen niedrig ist. Besonders bevorzugt enthält das Gummimaterial mindestens eines der folgenden Flammschutzmittel: Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Intumeszenzgemische, Carbonate, wie Calciumcarbonat oder Magnesiumcarbonat, Antimontrioxid, Mikrohohlkugeln, bevorzugt in nicht-expandierter Form, und/oder Blähgraphit. Die Flammschutzmittel können alleine oder in Kombination verwendet werden.

Durch das Flammschutzmittel in dem Gummimaterial der Ringwand des Balgs oder des gesamten Balgs kann ein besonders effektiver Schutz für das Federelement der Federvorrichtung vor Feuer beziehungsweise einem Brand gewährleistet werden. Wenn also ein Brand, insbesondere mit einer lichternen Flamme, und/oder eine Hitzequelle, wie eine warmgelaufene Bremse, die beispielsweise eine Temperatur von 600°C entwickeln kann, in der Nähe von der Federvorrichtung mit dem daran befestigten Balg zum Schutz des Federelements der Federvorrichtung entsteht, kann der Balg das Federelement vor dem Brand schützen. Darüber hinaus bietet das Flammschutzmittel im Gummimaterial der Ringwandung des Balgs oder des gesamten Balgs die Möglichkeit, dass das Gummimaterial des Federelements der Federvorrichtung frei von einem Flammschutzmittel ist. In der Praxis wurde nämlich festgestellt, dass das Einmischen von Flammschutzmittel die physikalischen Eigenschaften von Gummimaterial nachteilig in Bezug auf die Federrate beeinflussen kann. Dies ist jedoch zu vermeiden. Indem das Gummimaterial des Federelements frei von Flammschutzmittel ist, kann eine besonders gute Federwirkung, und insbesondere eine gewünschte Federrate, durch das Federelement sicher gewährleistet werden. Der Schutz vor einem Brand kann durch den Balg gewährleistet werden, der sich in der Schließstellung mantelseitig um das Federelement erstreckt. Damit können somit beide Vorteile erreicht werden, nämlich einerseits wird ein guter Brandschutz gewährleistet und andererseits wird eine besonders gute Federwirkung sichergestellt.

Gemäß einem zweiten Aspekt der Erfindung wird die eingangs genannte Aufgabe gelöst durch eine Federvorrichtung mit den Merkmalen des Anspruchs 13. Die Federvorrichtung weist ein erstes Befestigungselement, ein elastisches verformbares Federelement, ein zweites Befestigungselement und einen Balg gemäß dem ersten Aspekt der Erfindung und/oder eine der zugehörigen, vorteilhaften Ausgestaltungen auf. Bezüglich des Balgs wird auf die vorteilhaften Erläuterungen, bevorzugt in Merkmale, Effekte und/oder Vorteile, wie sie im Zusammenhang mit dem ersten Aspekt der Erfindung und/oder einer der zugehörigen, vorteilhaften Ausgestaltungen erläutert worden sind, in analoger Weise Bezug genommen. Für die Federvorrichtung ist es außerdem vorgesehen, dass ein erstes Federelementende des Federelements mit dem ersten Befestigungselement und ein zweites Federelementende des Federelements mit dem zweiten Befestigungselement verbunden sind, so dass sich das Federelement von dem ersten Befestigungselement zu dem zweiten Befestigungselement erstreckt. Der Balg ist für die Federvorrichtung in der Schließstellung. Außerdem ist es für die Federvorrichtung vorgesehen, dass das erste Balgende an dem ersten Befestigungselement und das zweite Balgende an dem zweiten Befestigungselement derart befestigt sind, sodass der Balg das Federelement umlaufend umschließt. Bezüglich der Vorteile und/oder technischen Effekte, die für die Federvorrichtung eintreten, wird in analoger Weise auf die technischen Effekte und/oder Vorteile verwiesen, die im Zusammenhang mit dem Balg gemäß dem ersten Aspekt der Erfindung und/oder der vorteilhaften Ausgestaltungen bereits erläutert worden sind. Insbesondere bietet die Federvorrichtung den Vorteil, dass das Federelement durch den Balg effektiv vor Schmutz, Licht, Schnee, Wasser, Feuer und/oder Wärme geschützt sein kann. Außerdem bietet der Balg die Möglichkeit, dass eine Wartung des Federelements besonders einfach und schnell ausgeführt werden kann. Dazu kann der Balg von der Schließstellung in die Öffnungsstellung versetzt werden. Ist der Balg außerdem zerstörungsfrei von der Schließstellung in die Öffnungsstellung versetzbar, so kann dieser Balg auch wiederverwendet werden, um den Balg von der Öffnungsstellung in die Schließstellung zu versetzten, nachdem die Überprüfung beziehungsweise die Wartung beendet ist.

Weitere Merkmale, Vorteile und/oder Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und/oder eine beliebige Kombination die Gegenstand der Erfindung, auch unabhängig von ihrer Zusammensetzung in den einzelnen Ansprüchen und/oder deren Rückbezügen. In den Figuren stehen weiterhin gleiche Bezugszeichen für gleiche oder ähnliche Objekte.
- Figur 1: zeigt eine vorteilhafte Ausgestaltung der Federvorrichtung in einer schematischen Querschnittsansicht.
- Figur 2: zeigt eine weitere vorteilhafte Ausgestaltung einer Federvorrichtung in einer schematischen Perspektivansicht.
- Figur 3: zeigt einen Teil einer Ringwand des Balgs in einer Öffnungsstellung in einer schematischen Seitenansicht.
- Figur 4: zeigt die Ringwand aus Figur 3 in einer Schließstellung des Balgs.
- Figur 5: zeigt einen Teil einer Ringwand einer weiteren vorteilhaften Ausgestaltung des Balgs in einer Öffnungsstellung in einer schematischen Seitenansicht.
- Figur 6: zeigt die Ringwand aus Figur 5 in einer Schließstellung des Balgs.
- Figur 7: zeigt einen Teil einer vorteilhaften Ausgestaltung eines Fahrzeugs in einer schematischen Seitenansicht.

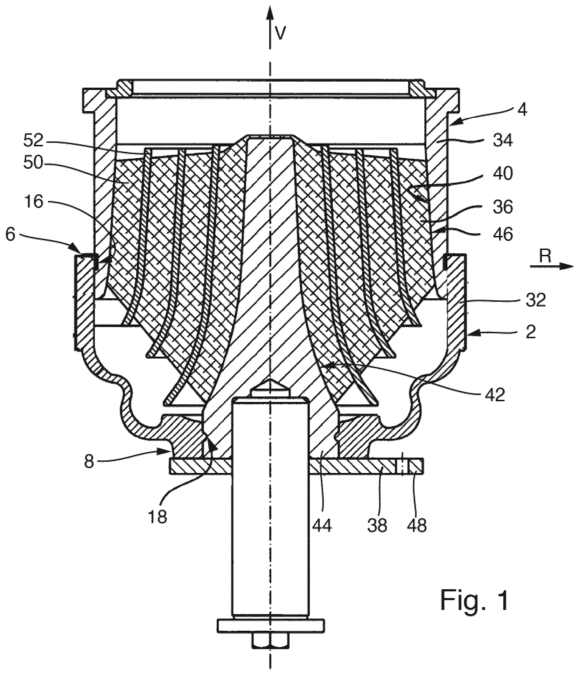

In der Figur 1 ist eine vorteilhafte Ausgestaltung einer Federvorrichtung 4 in einer schematischen Querschnittsansicht dargestellt. Die Federvorrichtung 4 weist ein erstes Befestigungselement 34 und ein zweites Befestigungselement 38 auf. Das erste Befestigungselement 34 ist bei dem in Figur 1 gezeigten Beispiel zylindrisch, insbesondere nach Art einer Hülse, ausgebildet. Das erste Befestigungselement 34 kann einteilig sein. Außerdem kann das erste Befestigungselement 34 aus Metall hergestellt sein. Das zweite Befestigungselement 38 ist in der in Figur 1 beispielhaft dargestellten Ausgestaltung mehrteilig, nämlich durch zwei Teile, gebildet. Das zweite Befestigungselement 38 weist nämlich eine Bodenplatte 48 und einen Kern 44 auf. Der Kern 44 kann aus Metall hergestellt sein. Auch die Bodenplatte 48 kann aus Metall hergestellt sein. Die Bodenplatte 48 ist kraft- und/oder formschlüssig mit dem Kern 44 verbunden. Zusammen sollen die Bodenplatte 48 und der Kern 44 das zweite Befestigungselement 38 bilden. Die Federvorrichtung 4 weist außerdem ein elastisch verformbares Federelement 36 auf. Das Federelement 36 kann von einem Federgummi 50 mit eingebetteten Metallplatten 52 gebildet sein. Dies ist jedoch nur eine von vielen möglichen Ausgestaltungsvarianten für das Federelement 36. Grundsätzlich ist es auch möglich, dass das Federelement 36 ausschließlich von Gummimaterial gebildet ist. Das Gummimaterial des Federelements 36 bzw. des Federgummis 50 enthält oftmals kein Flammschutzmittel. Dies hat sich in der Praxis als vorteilhaft erwiesen, um eine gewünschte Federwirkung und/oder eine gewünschte Federrate zu gewährleisten. Entsteht jedoch ein Brand oder ein Feuer in unmittelbarer Umgebung zu dem Federelement 36, kann dies dazu führen, dass von dem Federelement 36 Rauchgase freigesetzt werden, was jedoch zu vermeiden ist.

Für die Federvorrichtung 4 ist deshalb außerdem ein Balg 2 vorgesehen. Wenn im Folgenden der Balg 2 im Zusammenhang mit der Federvorrichtung 4 erläutert wird, so sollen die entsprechenden Erläuterungen in analoger Weise für den Balg 2 als solches gelten, und zwar auch dann, wenn dieser ohne die Federvorrichtung 4 verwendet wird.

Der Balg 2 dient zum Schutz der Federvorrichtung 4. Der Balg 2 ist dabei derart ringförmig ausgebildet, sodass sich der Balg 2 von einem ersten, stirnseitigen Balgende 6 zu einem zweiten, stirnseitigen Balgende 8 erstreckt. Das erste Balgende 6 kann gegenüberliegend zu dem zweiten Balgende 8 sein. Mit anderen Worten ist es bevorzugt vorgesehen, dass das erste Balgende 6 an einem in Axialrichtung gesehenen ersten Ende des Balgs 2 ausgebildet ist, wohingegen das zweite Balgende 8 in der Axialrichtung an dem gegenüberliegenden Ende des Balgs 2 ausgebildet ist. In Axialrichtung erstreckt sich der Balg 2 also von dem ersten Balgende 6 zu dem zweiten Balgende 8. Mit anderen Worten kann der Balg 2 eine Ringwand 32 aufweisen, die sich von dem ersten Balgende 6 zu dem zweiten Balgende 8 erstreckt.

Der Balg 2 ist verformbar ausgebildet. So kann der Balg 2 vollständig oder zumindest teilweise aus Gummimaterial gebildet sein. Insbesondere ist es vorgesehen, dass die Ringwand 32 des Balgs 2 aus Gummimaterial ausgebildet ist. Dabei ist es bevorzugt vorgesehen, dass der Balg 2 derart verformbar ist, um von einer Öffnungsstellung 10 in eine Schließstellung 12 versetzt zu werden.

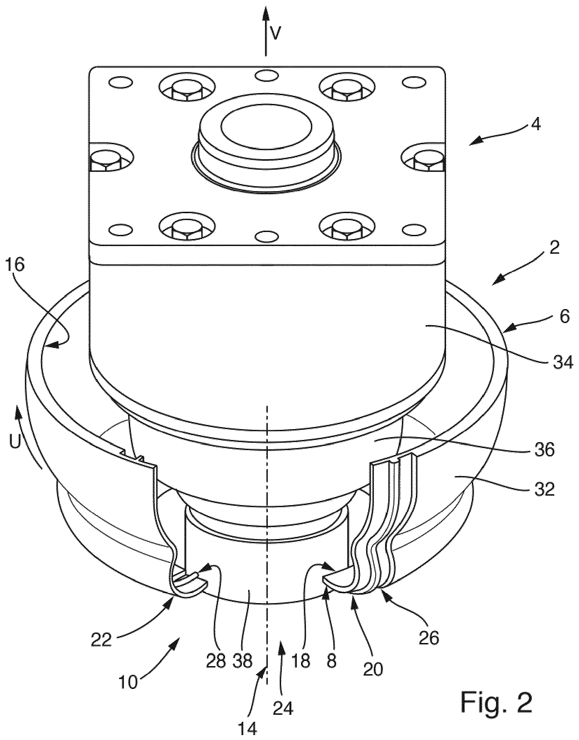

In der Figur 2 ist eine weitere vorteilhafte Ausgestaltung der Federvorrichtung 4 mit einem Balg 2 dargestellt. Hierbei handelt es sich um eine perspektivische Ansicht. Der Balg 2 ist entlang der Trennlinie 14 unterbrochen, sodass der Balg 2 in Umfangsrichtung U ein erstes Verschlussende 20 und ein in Umfangsrichtung U gegenüberliegendes zweites Verschlussende 22 aufweist. In der Figur 2 ist der Balg 2 in der Öffnungsstellung 10 dargestellt. In der Öffnungsstellung 10 ist der Balg entlang der Trennlinie 14, die sich von dem ersten Balgende 6 zu dem zweiten Balgende 8 erstreckt, unterbrochen. Wie es außerdem aus der Figur 2 vorteilhaft zu entnehmen ist, sind das erste Verschlussende 20 und das zweite Verschlussende 22 entlang der Trennlinie 14 voneinander getrennt und/oder voneinander beabstandet angeordnet. Ist der Balg 2 in der Öffnungsstellung 10, so kann der Balg 2 seitlich über das Federelement 36 und vorzugsweise über Teilabschnitte des ersten und zweiten Befestigungselements 34, 38 geschoben werden, sodass der Balg 2 zumindest das Federelement 36 mantelseitig umgreift. Dies ist beispielhaft in der Figur 2 gezeigt.

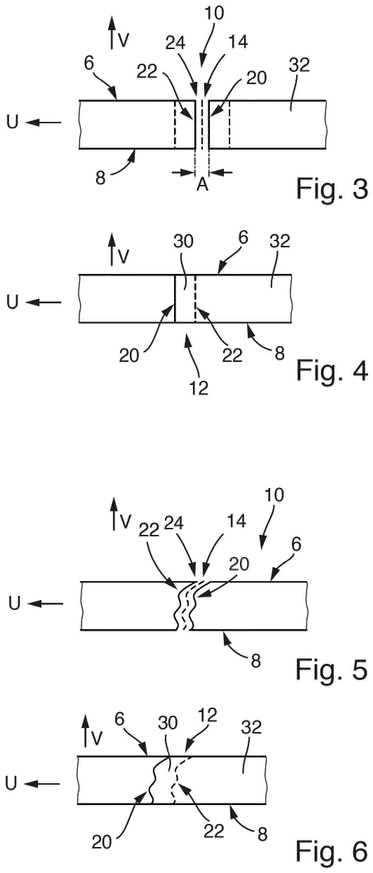

Wie zuvor erläutert, ist der Balg 2 insbesondere aufgrund des Gummimaterials derart verformbar ausgebildet, um von der Öffnungsstellung 10 in die Schließstellung 12 versetzt zu werden. In der Schließstellung 12 ist der Balg 2 an der Trennlinie 14 geschlossen. In diesem Zusammenhang soll auf die Figuren 3 und 4 beispielhaft verwiesen werden. In der Figur 3 ist die Ringwand 32 im Bereich um die Trennlinie 14 schematisch in einer Seitenansicht dargestellt.

Anzumerken ist, dass nur jeweils die Endabschnitte der Ringwand 32 dargestellt sind, die an das erste Verschlussende 20 bzw. das zweite Verschlussende 22 angrenzen. Wie aus der Figur 3 schematisch zu entnehmen ist, sind das erste Verschlussende 20 und das zweite Verschlussende 22 in Umfangsrichtung U gegenüberliegend aber gleichzeitig getrennt voneinander angeordnet, sodass beispielsweise ein Abstand A zwischen dem ersten Verschlussende 20 und dem zweiten Verschlussende 22 besteht. Aufgrund der getrennten Anordnung der beiden Verschlussenden 20, 22 entsteht zwischen den beiden Verschlussenden 20, 22 eine Unterbrechungsöffnung 24. Vorzugsweise ist die Trennlinie 14 in diesem Fall mittig entlang der Unterbrechungsöffnung 24 angeordnet. Somit kann der Balg 2 derart ausgestaltet sein, dass ein Abstand A in Umfangsrichtung U des Balgs 2 zwischen dem ersten Verschlussende 20 und dem zweiten Verschlussende 22 in der Öffnungsstellung 10 des Balgs 2 vergrößerbar ist, sodass die Unterbrechungsöffnung 24 entsteht, die sich von dem ersten, stirnseitigen Balgende 6 bis zu dem zweiten, stirnseitigen Balgende 8 erstreckt. Dabei kann es vorgesehen sein, dass der Balg 2 bzw. das zugehörige Gummimaterial derart verformbar ist, sodass der Abstand A auf einen Wert vergrößerbar ist, der zumindest dem Außendurchmesser des Federelements 36 oder dem Außendurchmesser einer der beiden Befestigungselemente 34, 38 der Federvorrichtung 4 entspricht. Dadurch kann gewährleistet werden, dass der Balg 2 in der Öffnungsstellung 10 seitlich über die Federvorrichtung 4, insbesondere das zugehörigen Federelement 36 oder eine der beiden Befestigungsvorrichtungen 34, 38 geschoben werden kann, bis der Balg 2 zumindest das Federelement 36 umfangsseitig umgreift.

Außerdem kann der Balg 2 von der Öffnungsstellung 10 in die Schließstellung 12 versetzt werden. In der Figur 4 ist der Ausschnitt der Seitenansicht des Balgs 2 aus Figur 3 dargestellt, wobei der Balg 2 in die Schließstellung 12 versetzt wurde. Beispielhaft kann es vorgesehen sein, dass das erste Verschlussende 20 und das zweite Verschlussende 22 in der Schließstellung 12 in Umfangsrichtung U des Balgs 2 überlappen. Dies ist rein beispielhaft in der Figur 4 dargestellt. So kann es vorgesehen sein, dass das erste Verschlussende 20 in Umfangsrichtung U und das zweite Verschlussende 22 entgegengesetzt der Umfangsrichtung U verschoben werden, um den Balg 2 von der Öffnungsstellung 10 in die Schließstellung 12 zu versetzen. Diese Verformung des Balgs 2 wird solange fortgesetzt, bis die Überlappung an den beiden Verschlussenden 20, 22 entsteht. In dem entsprechenden Überlappungsbereich kann eine kraft- und/oder formschlüssige Verbindung entstehen. In diesem Zusammenhang wird erneut auf die Figur 2 verwiesen.

In der genannten Figur 2 sind das erste Verschlussende 20 und das zweite Verschlussende 22 beispielhaft derart ausgebildet, dass an dem ersten Verschlussende 20 ein erstes Verschlussmittel 26 und an dem zweiten Verschlussende 22 ein zweites Verschlussmittel 28 ausgebildet sind. Die beiden Verschlussmittel 26, 28 können dazu ausgebildet sein, um eine formschlüssige und/oder kraftschlüssige Verbindung zu bilden, wenn die beiden Verschlussenden 20, 22 in Überlappung gebracht sind. So kann das erste Verschlussmittel 26 beispielsweise nach Art einer Doppellippe ausgebildet sein, die kraft- und formschlüssig über das zweite Verschlussmittel 28 greifen können, wobei das zweite Verschlussmittel 28 beispielhaft als eine einzelne Lippe ausgebildet ist. Das erste Verschlussmittel 26 und das zweite Verschlussmittel 28 sind derart korrespondierend zueinander ausgebildet, um einen Rastverbindung auszubilden. In einer weiteren, nicht beanspruchten Alternative können sie beispielsweise so gestaltet sein, dass sie eine Steckverbindung oder eine Schnappverbindung bilden. Andere Ausgestaltungsmöglichkeiten für das erste und zweite Verschlussmittel 26, 28 sind ebenfalls möglich. So können das erste und zweite Verschlussmittel 26, 28 insbesondere derart ausgestaltet sein, um in der Schließstellung 12 des Balgs 2 eine Klettverschlussverbindung oder eine Reisverschlussverbindung zu bilden.

Darüber hinaus ist es bevorzugt vorgesehen, dass das erste Verschlussmittel 26 und das zweite Verschlussmittel 28 derart ausgebildet sind, um eine wieder lösbare mechanische Verbindung, insbesondere eine wieder lösbare, kraftschlüssige und/oder formschlüssige Verbindung zu bilden. Dies bietet den Vorteil, dass der Balg 2 nicht nur von der Öffnungsstellung 10 in die Schließstellung 12 zerstörungsfrei versetzt werden kann, sondern dass der Balg 2 auch aus der Schließstellung 12 zerstörungsfrei in die Öffnungsstellung 10 versetzt werden kann. Somit kann der Balg 2 beispielsweise zerstörungsfrei zwischen der Öffnungsstellung 10 und der Schließstellung 12 versetzt werden.

Es ist jedoch auch möglich, dass ein Versetzen des Balgs 2 aus der Schließstellung 12 in die Öffnungsstellung 10 nicht notwendigerweise zerstörungsfrei erfolgen soll. Dies ist insbesondere dann von Vorteil, wenn der Balg 2 bestimmungsgemäß nicht wiederverwendet werden soll, insbesondere nach einer Überprüfung und/oder Wartung des Federelements 36. In diesem Fall kann der Balg 2 derart ausgestaltet sein, dass der Balg 2 in der Öffnungsstellung 10 hergestellt wird und außerdem aus der Öffnungsstellung 10 zerstörungsfrei in die Schließstellung 12 versetzt werden kann. Für die Verbindung zwischen dem ersten Verschlussende 20 und dem zweiten Verschlussende 22 kann deshalb außerdem ein Klebstoff eingesetzt werden, der auf zumindest einer der beiden Enden 20, 22 aufgetragen wird, bevor der Balg 2 aus der Öffnungsstellung 10 in die Schließstellung 12 versetzt wird. In der Schließstellung 12 kann sodann eine stoffflüssige Verbindung zwischen den beiden Verschlussenden 20, 22 entstehen. Diese stoffflüssige Verbindung kann vorzugsweise zusätzlich zu der kraft- und/oder formschlüssigen Verbindung mittels der Verschlussmittel 26, 28 bestehen.

Wird der in Figur 2 dargestellte Balg 2 von der dort ebenfalls dargestellten Öffnungsstellung 10 in die Schließstellung 12 versetzt, so kommt eine an dem ersten Balgende 6 ausgebildete erste Lippe 16 umlaufend und vorzugsweise ununterbrochen in Kontakt mit einer Außenseite des ersten Befestigungselements 34 der Federvorrichtung 4. Dabei ist es bevorzugt vorgesehen, dass der Balg 2 derart ausgebildet ist, dass eine staubdichte und/oder wasserdichte Verbindung zwischen der ersten Lippe 16 und dem ersten Befestigungselement 34 gebildet wird, wenn der Balg 2 in die Schließstellung 12 versetzt wird. In diesem Zusammenhang wird erneut auf die Figur 1 verwiesen, in der beispielhaft gezeigt ist, dass das erste Balgende 6 mit der zugehörigen ersten Lippe 16 direkt an dem ersten Befestigungselement 34 anliegt. Dadurch kann die umlaufend ununterbrochene Verbindung, die vorzugsweise staubdicht und/oder wasserdicht ist, entstehen.

Beim Versetzen des Balgs 2 aus der Öffnungsstellung 10 in die Schließstellung 12 ist es außerdem bevorzugt vorgesehen, dass eine an dem zweiten Balgende 8 ausgebildete, zweite Lippe 18 in direkten Kontakt mit dem zweiten Befestigungselement 38, insbesondere dem zugehörigen Kern 44, kommt, sodass eine vorzugsweise staubdichte und/oder wasserdichte Verbindung zwischen dem zweiten Balgende 8 und dem zweiten Befestigungselement 38 gebildet ist. Darüber hinaus ist es bevorzugt vorgesehen, dass das erste Verschlussende 20 und das zweite Verschlussende 22 in der Schließstellung 12 derart überlappen, dass eine Verschlussnaht 30 entsteht, wie sie beispielhaft in der Figur 3 dargestellt ist, wobei sich die Verschlussnaht ununterbrochen und vorzugsweise staubdicht und/oder wasserdicht von dem ersten Balgende 6 zu dem zweiten Balgende 8 erstreckt.

Nachdem der Balg 2 über zumindest das Federelement 36 der Federvorrichtung 4 geschoben und daraufhin in die Schließstellung 12 versetzt wurde, kann der Balg 2 das Federelement 36 vor äußeren Einwirkungen effektiv schützen. So kann der Balg 2 das Federelement 36 beispielsweise vor Wasser, Schnee, Eis und vorzugsweise auch vor mechanischen Stößen schützen.

In einer vorteilhaften Ausgestaltung ist es vorgesehen, dass die Ringwand 32 des Balgs 2 oder der gesamte Balg 2 aus einem Gummimaterial gebildet ist, das ein Flammschutzmittel enthält. In diesem Fall kann der Balg 2 außerdem dazu dienen, das Federelement 36 der Federvorrichtung 4 vor einem Brand, insbesondere einem Feuer und/oder hoher Wärme zu schützen. Dadurch kann außerdem gewährleistet werden, dass kein Rauchgas von dem Federelement 36 freigesetzt wird, wenn der Brand in unmittelbarer Nähe zu der Federvorrichtung 4 entsteht.

In der Figur 3 ist ein Teil der Ringwand 32 des Balgs 2 in der Öffnungsstellung 10 schematisch dargestellt. Eine Axialrichtung des Balgs 2, die vorzugsweise zu einer Vertikalrichtung V der Federvorrichtung 4 korrespondiert, kann dazu herangezogen werden, um die Ausgestaltung der Trennlinie 14 bzw. um die Ausgestaltung des ersten Verschlussendes 20 und des zweiten Verschlussendes 22 zu konstruieren. So ist es bevorzugt vorgesehen, dass sich die Trennlinie 14 entlang der Axialrichtung des Balgs 2 erstreckt. Die Axialrichtung des Balgs 2 kann auch als Vertikalrichtung des Balgs 2 bezeichnet sein. Die Vertikalrichtung V des Balgs 2 kann zu der Vertikalrichtung V der Federvorrichtung 4 korrespondieren.

In einer weiteren Ausgestaltung des Balgs 2, wie sie beispielhaft in Figur 5 dargestellt ist, kann es jedoch vorgesehen sein, dass sich die Trennlinie 14 nicht in Vertikalrichtung V bzw. nicht parallel oder koaxial zur Vertikalrichtung V des Balgs 2 erstreckt. Vielmehr kann es vorgesehen sein, dass sich die Trennlinie 14 in einer schrägen oder schlangenlinienförmigen Richtung zwischen dem ersten Balgende 6 und dem zweiten Balgende 8 erstreckt, sodass sich eine ununterbrochene Unterbrechungsöffnung 24 zwischen dem ersten Balgende 6 und dem zweiten Balgende 8 bildet. Das erste Verschlussende 20 und das zweite Verschlussende 22 können eine Form aufweisen, die zu der Trennlinie 14 korrespondiert. Obwohl die Trennlinie 14 und das erste Verschlussende 20 sowie das zweite Verschlussende 22 schlangenlinienförmig ausgebildet sein können, kann der Balg 2 von der Öffnungsstellung 10 in die Schließstellung 12 versetzt werden, wie es beispielhaft in der Figur 6 dargestellt ist. Auch hier kann eine entsprechende Überlappung zwischen den beiden Verschlussenden 20, 22 erreicht werden, was vorzugsweise zu der Verschlussnaht 30 führt.

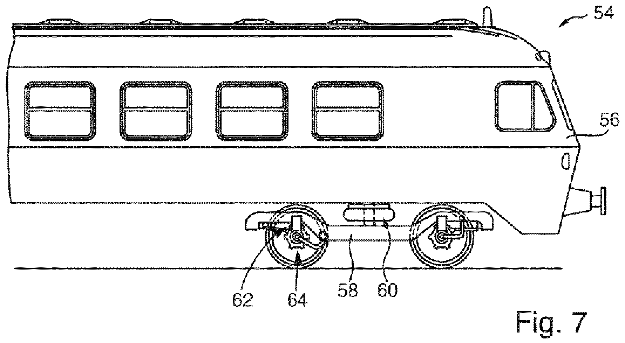

In der Figur 7 ist beispielhaft ein Teil eines Fahrzeugs 54 dargestellt. Bei dem in Figur 7 dargestellten Beispiel des Fahrzeugs 54 handelt es sich um einen sogenannten Triebwagen. Das Fahrzeug 54 weist einen Fahrzeugaufbau 56 auf, der über eine Sekundärfederung 60 mit einem Fahrgestell 58 gekoppelt ist, wobei das Fahrgestell 58 mit mehreren Achsen 64 über sogenannte Primärfederungen 62 gekoppelt ist. An jeder Achse 64 sind Räder drehbar gelagert befestigt, um eine Fortbewegung des Fahrzeugs 54 zu erlauben. Außerdem ist jede der Achsen 64 über eine der genannten Primärfederungen 62 mit dem Fahrgestell 58 verbunden. Die Primärfederung 62 kann von einer Federvorrichtung 4 gebildet sein, wie sie zuvor erläutert wurde. Diese Federvorrichtung 4 kann den Balg 2 aufweisen, wie dieser ebenfalls zuvor erläutert wurde. Entsteht ein Brand in der Nähe des Fahrzeugs 54, so verhindert der Balg 2 der Federvorrichtung 4, dass von dem Federelement 26 der Federvorrichtung 4 Rauchgas in die Umgebung freigegeben wird. Darüber hinaus dient der Balg 2 zum Schutz des Federelements 36 vor Wasser, Schnee, Schmutz und/oder Steinschlägen.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste

- A: Abstand
- R: Radialrichtung
- U: Umfangsrichtung
- V: Vertikalrichtung
- 2: Balg
- 4: Federvorrichtung
- 6: erstes Balgende
- 8: zweites Balgende
- 10: Öffnungsstellung
- 12: Schließstellung
- 14: Trennlinie
- 16: erste Lippe
- 18: zweite Lippe
- 20: erstes Verschlussende
- 22: zweites Verschlussende
- 24: Unterbrechungsöffnung
- 26: erstes Verschlussmittel
- 28: zweites Verschlussmittel
- 30: Verschlussnaht
- 32: Ringwand
- 34: erstes Befestigungselement
- 36: Federelement
- 38: zweites Befestigungselement
- 40: erstes Federelementende
- 42: zweites Federelementende
- 44: Kern
- 46: Innenseite
- 48: Bodenplatte
- 50: Federgummi
- 52: Metallplatte
- 54: Fahrzeug
- 56: Fahrzeugaufbau
- 58: Fahrgestell
- 60: Sekundärfederung
- 62: Primärfederung
- 64: Achse

## Patentansprüche

1. Balg (2) zum Schutz einer Federvorrichtung (4),
wobei der Balg (2) derart ringförmig ausgebildet ist, sodass sich der Balg (2) von einem ersten, stirnseitigen Balgende (6) zu einem zweiten, stirnseitigen Balgende (8) erstreckt,
wobei der Balg (2) verformbar ausgebildet ist, um von einer Öffnungsstellung (10) in eine Schließstellung (12) versetzt zu werden,
wobei der Balg (2) in der Öffnungsstellung (10) entlang einer Trennlinie (14), die sich von dem ersten Balgende (6) zu dem zweiten Balgende (8) erstreckt, unterbrochen ist, und
wobei der Balg (2) in der Schließstellung (12) an der Trennlinie (14) geschlossen ist,
wobei der Balg (2) eine erstes Verschlussende (20) und ein zweite Verschlussende (22) aufweist, die in der Öffnungsstellung (10) des Balgs (2) entlang der Trennlinie (14) einander gegenüberliegend und/oder getrennt voneinander angeordnet sind,
wobei an dem ersten Verschlussende (20) ein erstes Verschlussmittel (26) und an dem zweiten Verschlussende (22) ein zweites Verschlussmittel (28) ausgebildet sind, wobei das erste und zweite Verschlussmittel (26, 28) ausgebildet sind, um kraftschlüssig und/oder formschlüssig miteinander verbunden zu werden,
wobei das erste und zweite Verschlussmittel (26, 28) ausgebildet sind, in der Schließstellung (12) eine Rastverbindung zu bilden,
**dadurch gekennzeichnet, dass**
das erste Verschlussmittel (26) eine Doppellippe ausbildet und das zweite Verschlussmittel (28) eine einzelne Lippe ausbildet.

2. Balg (2) nach dem vorhergehenden Anspruch, **dadurch gekennzeichnet, dass** sich die Trennlinie (14) in einer Vertikalrichtung V des Balgs (2) erstreckt.

3. Balg (2) nach einem der vorhergehenden Ansprüche, **dadurch gekennzeichnet, dass** eine erste, radial nach innen ragende Lippe (16) an dem ersten Balgende (6) des Balgs (2) ausgebildet ist.

4. Balg (2) nach einem der vorhergehenden Ansprüche, **dadurch gekennzeichnet, dass** eine zweite, radial nach innen ragende Lippe (18) an dem zweiten Balgende (8) des Balgs (2) ausgebildet ist.

5. Balg (2) nach dem vorhergehenden Anspruch, **dadurch gekennzeichnet, dass** der Balg (2) derart verformbar ist, sodass ein Abstand A in Umfangsrichtung U des Balgs (2) zwischen dem ersten Verschlussende (20) von dem zweiten Verschlussende (22) in der Öffnungsstellung (10) des Balgs (2) vergrößerbar ist, sodass eine Unterbrechungsöffnung (24) entsteht, die sich von dem ersten, stirnseitigen Balgende (6) des Balgs (2) zu dem zweiten, stirnseitigen Balgende (8) des Balgs (2) erstreckt.

6. Balg (2) nach einem der vorhergehenden Ansprüche 5 bis 6, **dadurch gekennzeichnet, dass** das erste und zweite Verschlussende (20, 22) in der Schließstellung (12) einander in Umfangsrichtung U des Balgs (2) überlappen.

7. Balg (2) nach einem der vorhergehenden Ansprüche, **dadurch gekennzeichnet, dass** das erste und zweite Verschlussmittel (26, 28) ausgebildet sind, um in der Schließstellung (12) des Balgs (2) eine geschlossene Verschlussnaht (30) zu bilden, die sich ununterbrochen von dem ersten, stirnseitigen Balgende (6) des Balgs (2) zu dem zweiten, stirnseitigen Balgende (8) des Balgs (2) erstreckt.

8. Balg (2) nach einem der vorhergehenden Ansprüche, **dadurch gekennzeichnet, dass** eine Ringwand (32) des Balgs (2) und/oder der gesamte Balg (2) aus einem Gummimaterial gebildet ist, das ein Flammschutzmittel enthält.

9. **Federvorrichtung** (4), aufweisend:
ein erstes Befestigungselement (34),
ein elastisch verformbares Federelement (36),
ein zweites Befestigungselement (38), und
ein Balg (2) nach einem der vorhergehenden Ansprüche,
wobei ein erstes Federelementende (40) des Federelements (36) mit dem ersten Befestigungselement (34) und ein zweites Federelementende (42) des Federelements (36) mit dem zweiten Befestigungselement (38) verbunden sind, sodass sich das Federelement (36) von dem ersten Befestigungselement (34) zu dem zweiten Befestigungselement (38) erstreckt,
wobei der Balg (2) in der Schließstellung (12) ist, und
wobei das erste Balgende (6) an dem ersten Befestigungselement (34) und das zweite Balgende (8) an dem zweiten Befestigungselement (38) derart befestigt sind, sodass der Balg (2) das Federelement (36) umlaufend umschließt.

## Claims

1. Bellows (2) for protecting a spring device (4),
wherein the bellows (2) is of ring-shaped design such that the bellows (2) extends from a first, face-side bellows end (6) to a second, face-side bellows end (8), wherein the bellows (2) is of deformable form in order to be brought from an open position (10) into a closed position (12),
wherein the bellows (2) is, in the open position (10), interrupted along a parting line (14) which extends from the first bellows end (6) to the second bellows end (8), and
wherein the bellows (2), in the closed position (12), is closed at the parting line (14),
wherein the bellows (2) has a first closure end (20) and a second closure end (22), which are arranged opposite each other and/or separately from each other along the parting line (14) in the open position (10) of the bellows (2),
wherein a first closure means (26) is formed at the first closure end (20) and a second closure means (28) is formed at the second closure end (22), wherein the first and the second closure means (26, 28) are designed in order to be connected to each other in a force-fitting and/or interlocking manner,
wherein the first and the second closure means (26, 28) are designed to form a latching connection in the closed position (12),
**characterized in that**
the first closure means (26) forms a double lip and the second closure means (28) forms a single lip.

2. Bellows (2) according to the preceding claim, **characterized in that** the parting line (14) extends in a vertical direction V of the bellows (2).

3. Bellows (2) according to either of the preceding claims, **characterized in that** a first, radially inwardly projecting lip (16) is formed at the first bellows end (6) of the bellows (2).

4. Bellows (2) according to any of the preceding claims, **characterized in that** a second, radially inwardly projecting lip (18) is formed at the second bellows end (8) of the bellows (2).

5. Bellows (2) according to the preceding claim, **characterized in that** the bellows (2) is deformable such that a distance A in the circumferential direction U of the bellows (2) between the first closure end (20) and the second closure end (22) can be increased in the open position (10) of the bellows (2), so that an interruption opening (24) is created, which extends from the first, face-side bellows end (6) of the bellows (2) to the second, face-side bellows end (8) of the bellows (2).

6. Bellows (2) according to either of the preceding Claims 5 and 6, **characterized in that** the first and the second closure end (20, 22) overlap each other in the circumferential direction U of the bellows (2) in the closed position (12).

7. Bellows (2) according to any of the preceding claims, **characterized in that** that the first and the second closure means (26, 28) are designed in order to form a closed closure seam (30) in the closed position (12) of the bellows (2), which closure seam extends continuously from the first, face-side bellows end (6) of the bellows (2) to the second, face-side bellows end (8) of the bellows (2).

8. Bellows (2) according to any of the preceding claims, **characterized in that** an annular wall (32) of the bellows (2) and/or the entire bellows (2) is formed from a rubber material that contains a flame retardant.

9. Spring device (4), comprising:
a first fastening element (34),
an elastically deformable spring element (36),
a second fastening element (38), and
a bellows (2) according to any of the preceding claims,
wherein a first spring element end (40) of the spring element (36) is connected to the first fastening element (34) and a second spring element end (42) of the spring element (36) is connected the second fastening element (38), so that the spring element (36) extends from the first fastening element (34) to the second fastening element (38),
wherein the bellows (2) is in the closed position (12), and
wherein the first bellows end (6) is fastened to the first fastening element (34) and the second bellows end (8) is fastened to the second fastening element (38) such that the bellows (2) circumferentially encloses the spring element (36).

## Revendications

1. Soufflet (2) pour la protection d'un dispositif à ressort (4),
le soufflet (2) étant conçu avec une forme annulaire, de telle sorte que le soufflet (2) s'étend d'une première extrémité de côté frontal (6) du soufflet à une deuxième extrémité de côté frontal (8) du soufflet,
le soufflet (2) étant conçu de façon à être déformable afin d'être déplacé d'une position d'ouverture (10) à une position de fermeture (12),
dans la position d'ouverture (10), le soufflet (2) étant interrompu le long d'une ligne de séparation (14) qui s'étend de la première extrémité (6) du soufflet à la deuxième extrémité (8) du soufflet, et
le soufflet (2) étant, dans la position de fermeture (12), fermé au niveau de la ligne de séparation (14),
le soufflet (2) présentant une première extrémité de fermeture (20) et une deuxième extrémité de fermeture (22) qui, dans la position d'ouverture (10) du soufflet (2), sont agencées l'une en face de l'autre et/ou séparées l'une de l'autre le long de la ligne de séparation (14),
un premier moyen de fermeture (26) étant formé à la première extrémité de fermeture (20) et un deuxième moyen de fermeture (28) étant formé à la deuxième extrémité de fermeture (22), le premier et le deuxième moyen de fermeture (26, 28) étant conçus de façon à être reliés l'un à l'autre par adhérence et/ou par complémentarité de formes,
le premier et le deuxième moyen de fermeture (26, 28) étant conçus de façon à former une liaison par encliquetage dans la position de fermeture (12), **caractérisé en ce que**
le premier moyen de fermeture (26) forme une double lèvre et le deuxième moyen de fermeture (28) forme une lèvre simple.

2. Soufflet (2) selon la revendication précédente, **caractérisé en ce que** la ligne de séparation (14) s'étend dans une direction verticale V du soufflet (2).

3. Soufflet (2) selon l'une des revendications précédentes, **caractérisé en ce qu'**une première lèvre (16) faisant saillie radialement vers l'intérieur est formée à la première extrémité (6) du soufflet (2).

4. Soufflet (2) selon l'une des revendications précédentes, **caractérisé en ce qu'**une deuxième lèvre (18) faisant saillie radialement vers l'intérieur est formée sur la deuxième extrémité (8) du soufflet (2).

5. Soufflet (2) selon la revendication précédente, **caractérisé en ce que** le soufflet (2) est déformable de telle sorte qu'une distance A dans la direction circonférentielle U du soufflet (2) entre la première extrémité de fermeture (20) et la deuxième extrémité de fermeture (22) est apte à être augmentée dans la position d'ouverture (10) du soufflet (2), de sorte qu'il se forme une ouverture d'interruption (24) qui s'étend de la première extrémité de côté frontal (6) du soufflet (2) à la deuxième extrémité de côté frontal (8) du soufflet (2).

6. Soufflet (2) selon l'une des revendications précédentes 5 à 6, **caractérisé en ce que** la première et la deuxième extrémités de fermeture (20, 22) se chevauchent dans la direction circonférentielle U du soufflet (2) dans la position de fermeture (12).

7. Soufflet (2) selon l'une des revendications précédentes, **caractérisé en ce que** les premier et deuxième moyens de fermeture (26, 28) sont configurés pour former, dans la position de fermeture (12) du soufflet (2), un joint de fermeture fermé (30) qui s'étend de manière ininterrompue de la première extrémité de côté frontal (6) du soufflet (2) à la deuxième extrémité de côté frontal (8) du soufflet (2).

8. Soufflet (2) selon l'une des revendications précédentes, **caractérisé en ce qu'**une paroi annulaire (32) du soufflet (2) et/ou l'ensemble du soufflet (2) est formée d'un matériau en caoutchouc contenant un agent ignifuge.

9. Dispositif à ressort (4), comprenant :
un premier élément de fixation (34),
un élément élastique élastiquement déformable (36),
un deuxième élément de fixation (38), et
un soufflet (2) selon l'une des revendications précédentes,
une première extrémité (40) d'élément élastique de l'élément élastique (36) étant reliée au premier élément de fixation (34) et une deuxième extrémité (42) d'élément élastique de l'élément élastique (36) étant reliée au deuxième élément de fixation (38), de sorte que l'élément élastique (36) s'étend du premier élément de fixation (34) au deuxième élément de fixation (38),
le soufflet (2) étant dans la position de fermeture (12), et
la première extrémité (6) du soufflet étant fixée au premier élément de fixation (34) et la deuxième extrémité (8) du soufflet étant fixée au deuxième élément de fixation (38) de telle sorte que le soufflet (2) entoure l'élément élastique (36) sur tout son pourtour.
